# EUROPEAN PATENT APPLICATION

(11) **EP 2 589 634 A2**
(43) Date of publication of application: **08.05.2013**
(21) Application number: 12174519.4
(22) Date of filing: 29.06.2012
(51) Int. Cl.: C09J 7/02, H01L 31/048

(54) **Tape structure and solar module using the same**

(30) Priority: 03.11.2011 TW 100140145
(71) Applicant: AU Optronics Corporation, Hsin-Chu (TW)
(72) Inventor: Tseng, Huang-Chi, HSIN-CHU (TW); Wang, Yao-Chang, HSIN-CHU (TW); Lee, Wei-Jieh, HSIN-CHU (TW)
(74) Representative: Lang, Christian

(57) **Abstract**

A tape structure is disclosed which includes a body and a first adhesive layer. The body has at least one linear notch formed in a top surface thereof. The first adhesive layer is disposed on the top surface of the body. The linear notch is parallel to a long axis of the body. The body has a bottom surface opposite to the top surface, and a plurality of the linear notches are formed in the top surface and the bottom surface of the body. The tape structure may further include a second adhesive layer disposed on the bottom surface of the body.

## Description

### RELATED APPLICATIONS

This application claims priority to Taiwan Application Serial Number 100140145, filed March 03, 2011, which is herein incorporated by reference.

### BACKGROUND

### Field of Invention

The present invention relates to a tape structure.

### Description of Related Art

Tape can bond and position together two different items, and as a result, play an important role in assembly processes.

The conventional method for assembling a panel in a cavity of a frame involves using a double-sided tape with a significant width to adhere the panel in the cavity. The double-sided tape is bent and adhered on the edges of the panel, and the panel is inserted into the cavity and fixed in the frame. For aesthetic reasons, the double-sided tape is generally hidden in the frame after finishing assembly. However, some recent products employ a thin sideframe design, and consequently, the width of the double-sided tape is similarly getting thinner and thinner. However, with a smaller width of the double-sided tape, the adhesive area between the panel and the double-sided tape is reduced. Therefore, the double-sided tape cannot adhere the panel firmly to the frame, possibly resulting in some separation between the panel and the frame. One negative consequence of this is that subsequent assembly processes become very difficult.

Furthermore, the double-sided tape is rectangular in shape, and such a shape does not correspond to the shape of the corners of the panel. As a result, overlapping of the double-sided tape at the corners of the panel occurs, thereby increasing compression forces at the corners of the panel.

### SUMMARY

The present invention provides a tape structure to solve the problem of tape removal due to a small adhering area after being bent.

An aspect of the invention provides a tape structure which includes a body and a first adhesive layer. The body has at least one linear notch formed in a top surface thereof. The first adhesive layer is disposed on the top surface of the body. The linear notch is parallel to a long axis of the body. The body has a bottom surface opposite to the top surface, and the linear notches are formed in the top surface and the bottom surface of the body. The tape structure further includes a second adhesive layer disposed on the bottom surface of the body. An adhesive of the first adhesive layer can be different from an adhesive of the second adhesive layer. A sectional width of the linear notch is gradually reduced. The body includes a plurality of first sections and a plurality of second sections. The width of the first sections is larger than a width of the second sections. The first sections and the second sections are alternatingly arranged. The body is made of foaming material, and a material density of the second sections is less than a material density of the first sections. The body includes a plurality of high-material density sections and a plurality of low-material density sections, and the high-material density sections and the low-material density sections are alternatingly arranged.

Another aspect of the invention provides a solar module utilizing the tape structure. The solar module includes a solar panel, a frame having a cavity for receiving the solar panel, and the tape structure. The tape structure is disposed between the solar panel and the cavity, and two of the linear notches are aligned respectively with two edges of the solar panel, and a segment width of the tape structure on a bottom surface of the solar panel is greater than a segment width of the tape structure on a top surface of the solar panel.

Another aspect of the invention provides a solar module utilizing the tape structure. The solar module includes a solar panel, a frame having a cavity for receiving the solar panel, and the tape structure disposed between the solar panel and the cavity. The linear notch is aligned with an edge of the solar panel, and the second sections are arranged corresponding to a plurality of corners of the solar panel. The body is made of foaming material, and a material density of the second sections is less than a material density of the first sections.

Another aspect of the invention provides a solar module utilizing the tape structure. The solar module includes a solar panel, a frame having a cavity for receiving the solar panel, and the tape structure disposed between the solar panel and the cavity. The linear notch is aligned with an edge of the solar panel, and the low-material density sections are disposed corresponding to a plurality of corners of the solar panel.

The tape structure utilizes the linear notches formed on the body to increase the bending ability of the tape structure, thereby preventing removal of the tape structure at areas where the tape structure is bent. Additionally, the overlapping of the tape structure at areas where there are large angles can be prevented by the design of the alternatingly arranged sections with different segment widths and/or different material densities.

It is to be understood that both the foregoing general description and the following detailed description are by examples, and are intended to provide further explanation of the invention as claimed.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention. In the drawings,
Fig. 1 is a cross-sectional view of a first embodiment of a tape structure of the invention;
Fig. 2 is a cross-sectional view of the tape structure of Fig. 1 after the tape structure is adhered on a panel;
Fig. 3 is a cross-sectional view of a second embodiment of the tape structure of the invention;
Fig. 4 is a cross-sectional view of a third embodiment of the tape structure of the invention;
Fig. 5 is a cross-sectional view of a fourth embodiment of the tape structure of the invention;
Fig. 6 is a cross-sectional view of a fifth embodiment of the tape structure of the invention;
Fig. 7 is a cross-sectional view of an embodiment of a solar module utilizing the tape structure of the invention;
Fig. 8 is a top view of a sixth embodiment of the tape structure of the invention;
Fig. 9 is a top view of an embodiment after the tape structure in Fig. 8 is adhered on a solar panel of Fig. 7;
Fig. 10 is a top view of a seventh embodiment of the tape structure of the invention;
Fig. 11 is a top view of an eighth embodiment of the tape structure of the invention; and
Fig. 12 is a cross-sectional view of a ninth embodiment of the tape structure of the invention.

### DESCRIPTION OF THE EMBODIMENTS

Reference will now be made in detail to the present embodiments of the invention, examples of which are illustrated in the accompanying drawings. Wherever possible, the same reference numbers are used in the drawings and the description to refer to the same or like parts.

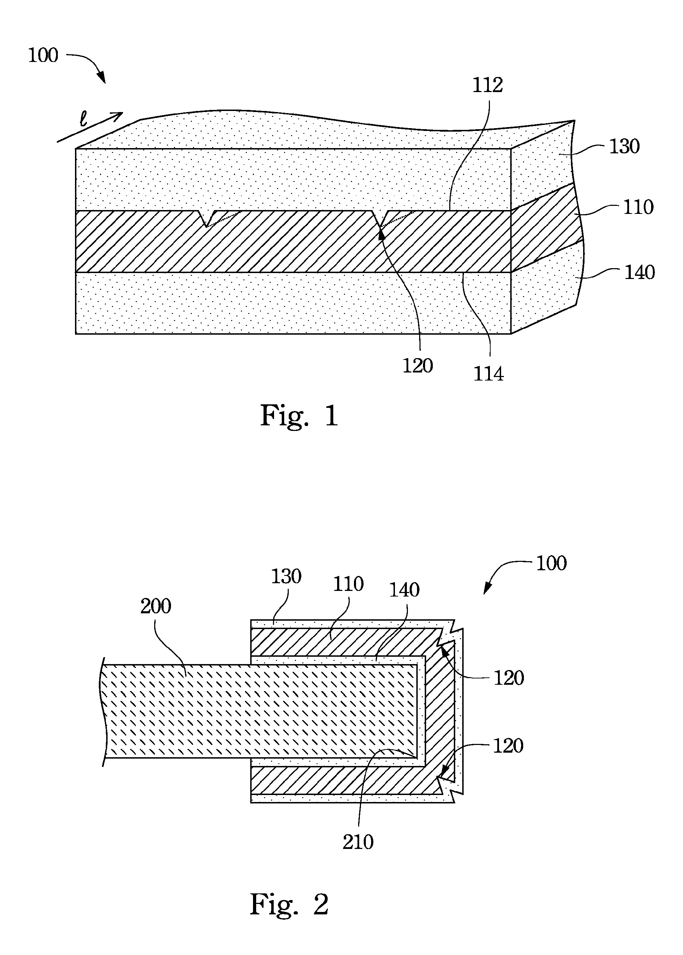

Fig. 1 is a cross-sectional view of a first embodiment of a tape structure of the invention. The tape structure 100 includes a body 110, one or more linear notches 120 formed in the body 110, a first adhesive layer 130, and a second adhesive layer 140. The linear notches 120 are formed in a top surface 112 of the body 110. The first adhesive layer 130 is disposed on the top surface 112, and the second adhesive layer 140 is disposed on a bottom surface 114 of the body 110, which is opposite to the top surface 112.

The linear notches 120 are formed extending in a direction parallel to a long axis *l* of the body 110. The linear notches 120 cut into the body 110 but do not cut through the same. The sectional width of the linear notches 120 is gradually reduced from the top surface 112. The body 110 can be made of a foaming material. The adhesive of the first adhesive layer 130 can be the same as the adhesive of the second adhesive layer 140.

Fig. 2 is a cross-sectional view of the tape structure of Fig. 1 after the tape structure is adhered on a panel. The tape structure 100 is bent and adhered on the surface of the panel 200. The second adhesive layer 140 is adhered on the panel 200. The linear notches 120 are aligned with edges 210 of the panel 200. The tape structure 100 can be easily bent as a result of the formation of the linear notches 120 in the body 110 thereof, and a larger deformation is possible at areas neighboring the linear notches 120, so that the tape structure 100 can be firmly adhered on the panel 200 and not be easily removed therefrom. The edges 210 of the panel 200 correspond to where the panel 200 is bent in the direction of the thickness thereof.

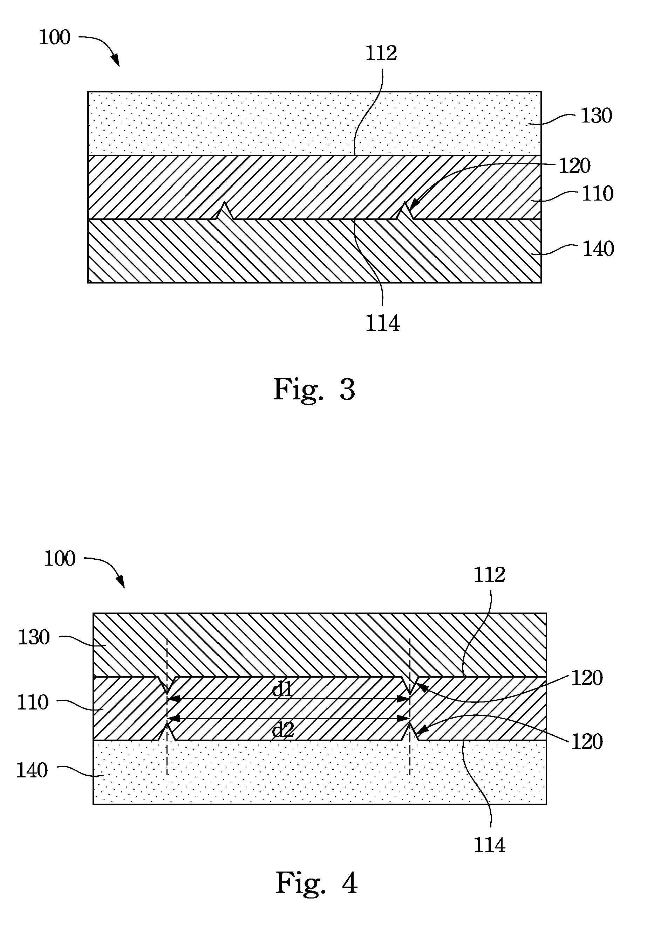

Fig. 3 is a cross-sectional view of a second embodiment of the tape structure of the invention. The linear notches 120 can be formed in the bottom surface 114 of the body 110. That is, the linear notches 120 are formed in the bottom surface 114 of the body 110 facing the second adhesive layer 140. Moreover, the adhesive of the first adhesive layer 130 can be different from the adhesive of the second adhesive layer 140. For example, the adhesive of the first adhesive layer 130 may have a greater adhesive strength than the adhesive of the second adhesive layer 140 in order to enhance the adhering ability of the first adhesive layer 130, or alternatively, the adhesive of the second adhesive layer 140 may have a greater adhesive strength than the adhesive of first adhesive layer 130 in order to enhance the adhering ability of the second adhesive layer 140.

Fig. 4 is a cross-sectional view of a third embodiment of the tape structure of the invention. The linear notches 120 are formed in both the top surface 112 and the bottom surface 114 of the body 110. That is, the linear notches 120 are formed in the top surface 112 of the body 110 facing the first adhesive layer 130 and also in the bottom surface 114 of the body 110 facing the second adhesive layer 140. The adhesive of the first adhesive layer 130 may be different from that of the second adhesive layer 140. In addition, the distance d1 between the linear notches 120 formed in the top surface 112 can be the same as the distance d2 between the linear notches 120 formed in the bottom surface 114. However, the linear notches 120 formed in the top surface 112 can have distances to right and left sides of the body 110 that are different from the distances to the right and left sides of the body 110 for the linear notches 120 formed in the bottom surface 114.

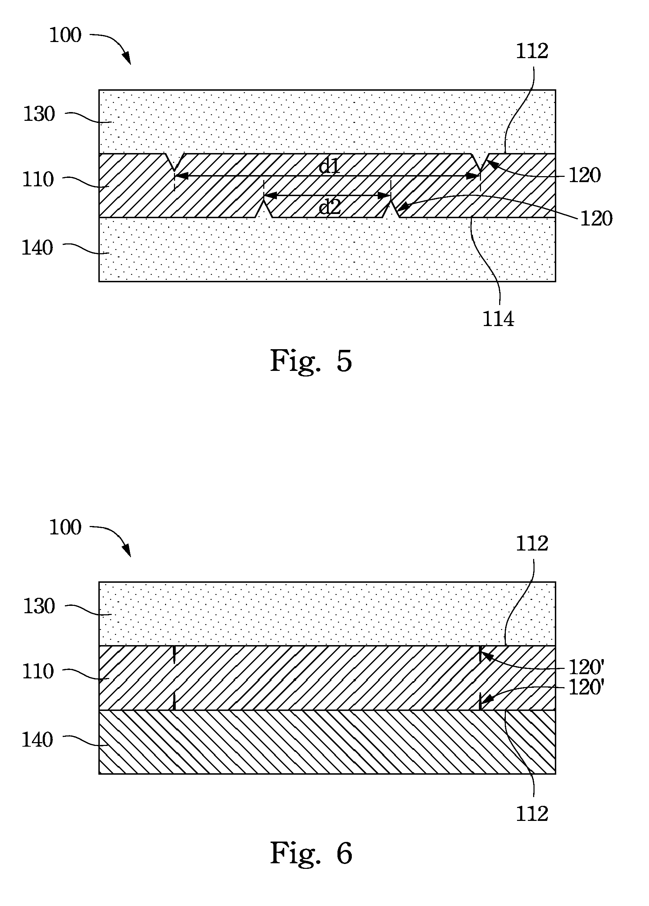

Fig. 5 is a cross-sectional view of a fourth embodiment of the tape structure of the invention. The linear notches 120 are formed in both the top surface 112 and the bottom surface 114 of the body 110. The adhesive of the first adhesive layer 130 may be the same as the adhesive of the second adhesive layer 140. The distance d1 between the linear notches 120 formed in the top surface 112 is greater than the distance d2 between the linear notches 120 formed in the bottom surface 114. The second adhesive layer 140 may be utilized for being adhered on the panel 200 (see Fig. 2), and the first adhesive layer 130 may be utilized for being adhered on a frame (not shown). Namely, the top surface 112 can form an outer surface of the tape structure 100, and the bottom surface 114 can form an inner surface of the tape structure 100. The distance d1 between the linear notches 120 formed in the outer surface 112 is greater than the distance d2 between the linear notches 120 formed in the inner surface 114, so that assembly can be easily performed.

Fig. 6 is a cross-sectional view of a fifth embodiment of the tape structure of the invention. The linear notches 120' can be formed as simple cuts or slits in the body 110, in which the sectional width of each of the linear notches 120' is substantially the same from top to bottom. In other embodiments, the sectional profile of the linear notches can be other shapes so as to provide a better bending ability to the tape structure. For example, in other embodiments, the linear notches may be curved, wedge shaped, V-shaped, U-shaped, etc.

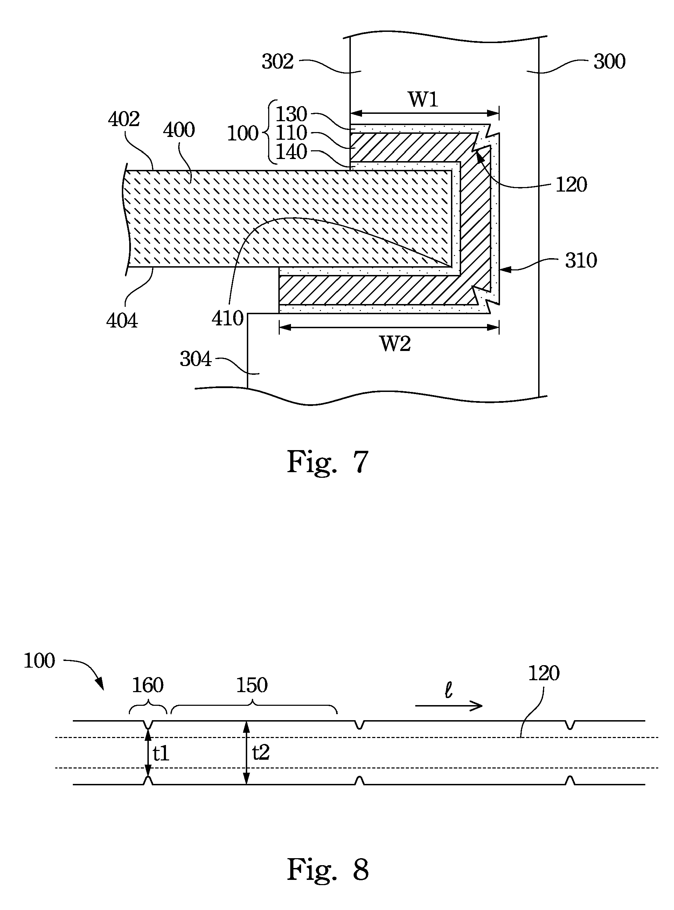

Fig. 7 is a cross-sectional view of an embodiment of a solar module utilizing the tape structure of the invention. The solar module includes a frame 300, a solar panel 400, and the tape structure 100. The frame 300 has a cavity 310 for receiving the solar panel 400. The tape structure 100 is utilized for adhering the solar panel 400 in the cavity 310 of the frame 300. The tape structure 100 is a double-sided tape having the first adhesive layer 130 and the second adhesive layer 140. The tape structure 100 is bent and adhered on the solar panel 400, and the solar panel 400 and the tape structure 100 adhered thereon are placed in the cavity 310 for assembly with the frame 300. The second adhesive layer 140 is adhered on the solar panel 400, and the first adhesive layer 130 is adhered on the cavity 310, such that the solar panel 400 is secured in the cavity 310.

The tape structure 100 is bent and adhered on the solar panel 400. The frame 300 has narrow side frame width to enhance power efficiency. The part of the tape structure 100 disposed on a top surface 402 (light receiving surface) of the solar panel 400 should be hidden under the frame 300 for aesthetic reasons. Furthermore, in an environmental test, the solar panel 400 exhibits a snow loading of about 5400 Pa, and therefore, a lower rib 304 of the frame 300 is wider than an upper rib 302. As a consequence, a segment width W2 of the part of the tape structure 100 on a bottom surface 404 of the solar panel 400 is greater than a segment width W1 of the part of the tape structure 100 on a top surface 402 of the solar panel 400.

Although the segment width W1 of the part of the tape structure 100 on the top surface 402 of the solar panel 400 is relatively small, the tape structure 100 can still be firmly adhered on the solar panel 400 as a result of the formation of the linear notches 120. The linear notches 120 are aligned with the edges 410 of the solar panel 400 to thereby allow bending of the tape structure 100 at large angles, such that the adhering ability of the part of the tape structure 100 with the narrow segment width W1 disposed on the top surface 402 of the solar panel 400 can be increased.

The position and deformation of the linear notches 120 and the manner in which the adhering ability of the tape structure is improved after being bent have been described above, and therefore, such a description will not be repeated below.

Fig. 8 is a top view of a sixth embodiment of the tape structure of the invention. The tape structure 100 has a long axis /, and the linear notches 120 are disposed parallel to the long axis /. The tape structure 100 has a plurality of first sections 150 and a plurality of second sections 160. Each of the first sections 150 has a large width t2, and each of the second sections 160 has a small width t1 (i.e., the width t2 of the first sections 150 is larger than the width t1 of the second sections 160). The first sections 150 and the second sections 160 are alternatingly arranged. The shape of the second sections 160 having the small width t1 can be neck shaped or dog bone shaped. Namely, the middle portion of the second sections 160 has the narrowest width. The second sections 160 of the tape structure 100 provide for a better bending ability of the tape structure 100.

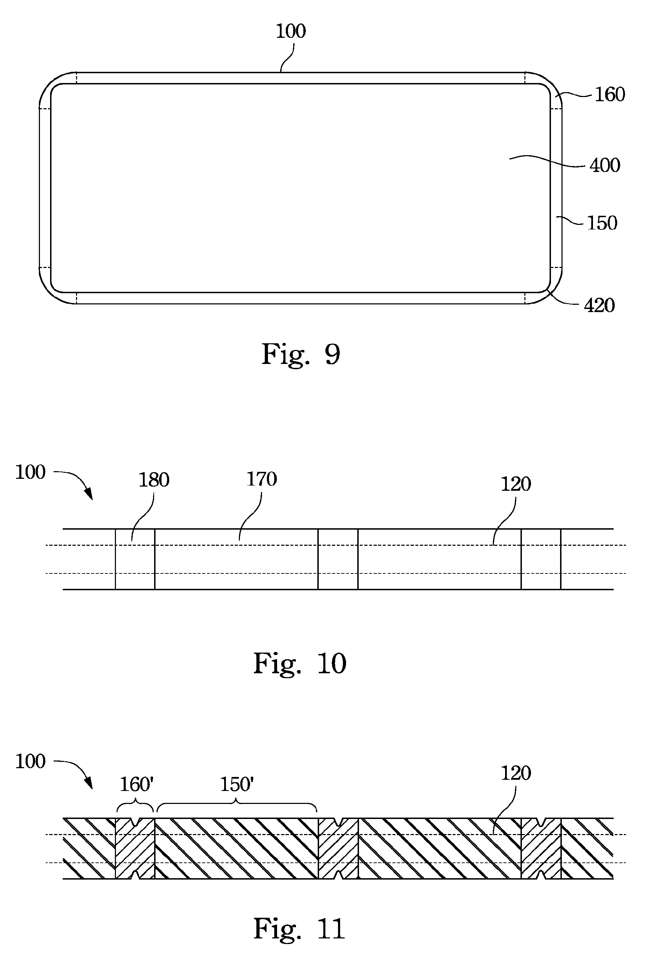

Fig. 9 is a top view of an embodiment after the tape structure in Fig. 8 is adhered on the solar panel of Fig. 7. The tape structure 100 is bent and adhered on the sides of the solar panel 400. The second sections 160 are disposed on corners 420 of the solar panel 400. The second sections 160 are shaped as a neck or a dog bone, as described above, so that the second sections 160 can be bent easily, especially at areas where there are large angles. Therefore, overlapping of the tape structure 100 when the same is bent at a large angle can be prevented. After the tape structure 100 is adhered on the solar panel 400, the solar panel 400 and the tape structure 100 adhered thereon are assembled to the frame 300 as shown in Fig. 7.

Fig. 10 is a top view of a seventh embodiment of the tape structure of the invention. The problem of overlapping of the tape structure at areas where there are large angles can be solved not only by adjusting the width of the tape, but also by adjusting the material density of the body. For example, the body of the tape structure may be made of foaming material. In greater detail, the tape structure 100 may include a plurality of high-material density sections 170 and a plurality of low-material density sections 180. The high-material density sections 170 and the low-material density sections 180 are alternatingly arranged. The low-material density sections 180 are disposed corresponding to the corners 420 of the solar panel 400 (see Fig. 9). The low-material density sections 180 can be bent easily, especially at areas where there are large angles. Therefore, overlapping of the tape structure 100 when the same is bent at a large angle can be prevented. After the tape structure 100 is adhered on the solar panel 400, the solar panel 400 and the tape structure 100 adhered thereon are assembled to the frame 300 as shown in Fig. 7.

Fig. 11 is a top view of an eighth embodiment of the tape structure of the invention. The tape structure 100 can also undergo bending at large angles by adjusting both width and material density. In particular, the material density of the first sections 150' which have a small width can be less than the material density of the second sections 160' which have a large width. The first sections 150' and the second sections 160' are alternatingly arranged. The second sections 160' are disposed corresponding to the corners 420 of the solar panel 400 (see Fig. 9). The second sections 160' with low-material density can be bent easily at a large angle. Therefore, overlapping of the tape structure when the same is bent at a large angle can be prevented. After the tape structure 100 is adhered on the solar panel 400, the solar panel 400 and the tape structure 100 adhered thereon are assembled to the frame 300 as shown in Fig. 7.

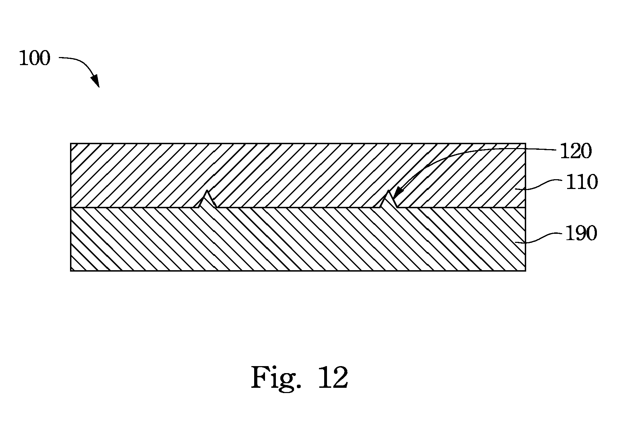

Fig. 12 is a cross-sectional view of a ninth embodiment of the tape structure of the invention. The tape structure 100 can also include only the body 110 and an adhesive layer 190 formed on a single surface of the body 110. Such a configuration may be employed when the tape structure 100 is utilized for single-sided adhering. The surface of the body 110 contacting the adhesive layer 190 is formed with the linear notches 120. The linear notches 120 can be utilized for increasing the bending ability of the tape structure 100.

The first adhesive layer and the second adhesive layer can have the same adhesive or a different adhesive. The linear notches can be formed on one side or two opposite sides of the body. The distance between the linear notches can be the same or different. The tape structure can include the first sections and the second sections with different widths, and the first section and the second sections are alternatingly arranged. Moreover, the material of the first sections and the second sections can be the same or different. The tape structure can include the high-material density sections and the low-material density sections, and the high-material density sections and the low-material density sections are alternatingly arranged.

The tape structure utilizes the linear notches formed in the body to increase the bending ability of the tape structure, thereby preventing removal of the tape structure. Overlapping of the tape structure at areas where there are large angles can be prevented by the design of the alternatingly arranged sections with different widths and/or different material densities.

## Claims

1. A tape structure (100), **characterized by** comprising:
a body (110) comprising at least one linear notch(120,120') formed in a top surface (112) of the body (110), wherein the linear notch (120) is parallel to a long axis of the body (110); and
a first adhesive layer (130) disposed on the top surface (112) of the body (110).

2. The tape structure of claim 1, **characterized in that** the body (110) has a bottom surface (114) opposite to the top surface (112), and a plurality of the linear notches (120, 120') are formed in the top surface (112) and the bottom surface (114) of the body(110).

3. The tape structure of claim 1 or 2, **characterized by** further comprising a second adhesive layer (140) disposed on the bottom surface (114) of the body(110).

4. The tape structure of claim 3, **characterized in that** an adhesive of the first adhesive layer (130) is different from an adhesive of the second adhesive layer (140).

5. The tape structure of any of claims 1 to 4, **characterized in that** a sectional width of the linear notch (120, 120') is gradually reduced.

6. The tape structure of any of claims 1 to 5, **characterized in that** the body (110) comprises a plurality of first sections (150, 150') and a plurality of second sections (160, 160'), a width of the first sections (150, 150') is larger than a width of the second sections (160, 160'), and the first sections (150, 150') and the second sections (160, 160') are alternatingly arranged.

7. The tape structure of claim 6, **characterized in that** the body (110) is made of foaming material, and a material density of the second sections (160') is less than a material density of the first sections (150').

8. The tape structure of any of claims 1 to 5, **characterized in that** the body (110) is made of foaming material, the body (110) comprises a plurality of high-material density sections (170) and a plurality of low-material density sections (180), and the high-material density sections (170) and the low-material density sections (180) are alternatingly arranged.

9. A solar module, **characterized by** comprising:
a solar panel (400);
a frame (300) comprising a cavity (310) for receiving the solar panel (400); and
the tape structure (100) of any of claims 1 to 8 disposed between the solar panel (400) and the cavity (310).

10. A solar module of claim 9, wherein two of the linear notches (120) are aligned respectively with two edges (410) of the solar panel (400), and a segment width of the tape structure (100) on a bottom surface (404) of the solar panel (400) is greater than a segment width of the tape structure (100) on a top surface (402) of the solar panel (400).

11. A solar module of claim 9, wherein the linear notch (120) is aligned with an edge of the solar panel (400), and wherein the body (110) comprises a plurality of first sections (150, 150') and a plurality of second sections (160, 160'), a width of the first sections (150, 150') is larger than a width of the second sections (160, 160'), and the first sections (150, 150') and the second sections (160, 160') are alternatingly arranged and wherein the second sections (160, 160') are arranged corresponding to a plurality of corners (420) of the solar panel (400).

12. A solar module of claim 9, wherein the linear notch (120) is aligned with an edge (410) of the solar panel (400), and wherein the body (110) comprises a plurality of high-material density sections (170) and a plurality of low-material density sections (180), and the high-material density sections (170) and the low-material density sections (180) are alternatingly arranged and wherein the low-material density sections (180) are disposed corresponding to a plurality of corners (420) of the solar panel (400).
